# EUROPÄISCHE PATENTSCHRIFT

(11) **EP 2 359 104 B1**
(45) Veröffentlichungstag und Bekanntmachung des Hinweises auf die Patenterteilung: **07.01.2015**
(21) Anmeldenummer: 09752754.3
(22) Anmeldetag: 17.11.2009
(51) Int. Cl.: G01G 19/04

(54) **SYSTEM ZUR ANALYSE DES FAHRWERKSZUSTANDS BEI SCHIENENFAHRZEUGEN**
SYSTEM FOR ANALYSIS OF VEHICLE CONDITION IN RAIL VEHICLES
SYSTÈME POUR L'ANALYSE DE L'ÉTAT DE L'ORGANE DE ROULEMENT DE VÉHICULES FERROVIAIRES

(30) Priorität: 19.11.2008 DE 102008058244
(43) Veröffentlichungstag der Anmeldung: 24.08.2011
(73) Patentinhaber: Schenck Process GmbH, 64293 Darmstadt (DE)
(72) Erfinder: GROLL, Peter, 64297 Darmstadt (DE); MÜLLER, Ralph, 64291 Darmstadt (DE)
(86) Internationale Anmeldenummer: PCT/EP2009/008151
(87) Internationale Veröffentlichungsnummer: WO 2010/057609

(56) Entgegenhaltungen:
- EP-A2- 1 847 819
- DE-C1- 3 937 318
- GB-A- 2 221 301

## Beschreibung

Die Erfindung betrifft allgemein das technische Gebiet von Schienenfahrzeugen sowie ein System zur Analyse des Fahrwerkszustand bei Schienenfahrzeugen. Die Erfindung betrifft insbesondere ein System sowie ein Verfahren zur Analyse des Fahrwerkszustand bei Schienenfahrzeugen durch Erfassung von Belastungen, die im Rad/Schiene-Kontakt bei Schienenfahrzeugen auftreten.

Es sind bereits Systeme bekannt, bei denen eine Messstrecke an einer Schiene eingerichtet ist, wie z.B. aus der Druckschrift DE 10 2006 015 924 A1 oder aus der EP 1 847 819 A2. Bei diesen bekannten Systemen sind unter der Schiene mehrere Messvorrichtungen in Schienenlängsrichtung angeordnet, welche die auf die Schiene einwirkenden Kräfte erfassen. Mittels der Messvorrichtungen können die bei der Überfahrung der Schiene durch das Schienenfahrzeug entstehende Kräfte oder Momente im Gleiskörper gemessen werden. Solche bekannten Systeme beschränken sich jedoch darauf, die in der Schiene entstehenden Kräfte oder Momente zu messen, was nur eine eingeschränkte Diagnose in Bezug auf den Zustand des Fahrwerks des Schienenfahrzeugs zulässt. So können mit diesen Anlagen z.B. Flachstellen an Rädern von Gleisfahrzeugen erkannt werden, allerdings nur mit einer Qualitätsaussage, die lediglich aus der Kraftmesstechnik abgeleitet ist. Aussagen zu geometrischen Eigenschaften der Flachstellen sind damit nur eingeschränkt möglich.

Im Stand der Technik sind ferner Anlagen zur Erkennung von heißgelaufenen Achslagern von Gleisfahrzeugen bekannt, die auch als Heißläuferortungsanlagen bezeichnet werden. Solche Anlagen haben jedoch den Nachteil, dass sie die Lagerschäden der Rad- bzw. Achslager am Schienenfahrzeug erst dann erkennen, wenn der Fahrzeugzustand des Gleisfahrzeuges bereits kritisch ist.

Die bekannten Heißläuferortungsanlagen basieren meist auf dem Prinzip der Infrarotmesstechnik und können damit lediglich über eine Temperaturdifferenzmessung Aussagen zu möglichen Lagerschäden liefern. Für die Wartung von Schienenfahrzeugen sowie Bahnbetreiber sind die Trefferquote und die Zuverlässigkeit exakter Aussagen von Diagnoseanlagen über den Zustand des Fahrwerks der Schienenfahrzeuge von entscheidender Bedeutung.

Der Erfindung liegt daher die Aufgabe zugrunde, ein System sowie ein Verfahren zu schaffen, das eine bessere Diagnose in Bezug auf den Zustand des Fahrwerks eines Schienenfahrzeugs zulässt.

Die vorliegende Erfindung löst diese Aufgabe durch ein System gemäß Anspruch 1.

Gemäß einem weiteren Aspekt der vorliegenden Erfindung wird ein Verfahren gemäß Anspruch 12 bereitgestellt.

Vorteilhafte Weiterbildungen der Erfindung sind Gegenstand der abhängigen Ansprüche.

Dabei ist es für die Zuverlässigkeit der Diagnose besonders vorteilhaft, wenn das Erfassen der Kräfte und/oder Momente in der Schienenmessstrecke und das Erfassen der Schallwellen gleichzeitig vorgenommen wird. Solche gleichzeitig ermittelten Messsignale können dann miteinander korreliert oder überlagert werden, so dass von derselben Überfahrung der Schienenmessstrecke durch ein Schienenfahrzeug gleichzeitig erfasste Kraftmesssignale und Schallmesssignale mit unmittelbarer zeitlicher Korrelation miteinander in Bezug gesetzt und parallel zueinander ausgewertet werden können. Über die Auswertung der zueinander korrelierten Kraftmesssignale und Schallmesssignale können dann Rückschlüsse auf den Zustand des Fahrwerks des Schienenfahrzeugs gezogen werden. Weitere besondere Ausgestaltungen und Ausführungsformen der Erfindung sind in den Unteransprüchen angegeben.

Die vorliegende Erfindung stellt damit ein System sowie ein Verfahren zur Messung von Belastungen beim Rad/Schiene-Kontakt von Schienenfahrzeugen bereit, bei dem sowohl die im Gleiskörper durch das Befahren eines Schienenfahrzeugs auftretenden Kräfte als auch die dabei entstehenden akustischen Schallwellen erfasst und dahingehend ausgewertet werden, dass daraus Rückschlüsse auf den Zustand des Fahrwerks des Schienenfahrzeugs geschlossen werden können. Mit der vorliegenden Erfindung kann folglich ein mechanisch/akustisches Messsystem bereitgestellt werden, mit dem beispielsweise Lagerschäden an Zügen frühzeitig erkannt werden können.

Damit bietet die vorliegende Erfindung ein Diagnosesystem zur Analyse des Zustands eines Fahrgestells von Schienenfahrzeugen, insbesondere deren Radlager und Radgeometrien, mit dem die durch das Befahren eines Schienenfahrzeugs auftretenden Belastungen und Geräusche dahingehend erfasst und ausgewertet werden können, dass daraus zuverlässigere Rückschlüsse auf den Zustand des Fahrwerks des Schienenfahrzeugs, wie z.B. des Radlagers und der Radgeometrie, gezogen werden können.

Mit der vorliegende Erfindung können bessere Imperfektionsaussagen in Bezug auf Radrundheiten oder Lagerschäden am Fahrwerk eines Schienenfahrzeugs getroffen werden. Die vorliegende Erfindung stellt damit eine Optimierung zur Überwachung der Funktionstüchtigkeit von Fahrwerk eines Schienenfahrzeugs, einschließlich deren Räder und Radlager, dar. Dadurch können direkte Aussagen zu Schadstellen bzw. Geometrieproblemen an Rädern oder zu möglichen Lagerschäden am Fahrwerk von Schienenfahrzeugen getroffen werden.

Durch die vorliegende Erfindung wird neben den beim Befahren des Gleiskörpers durch ein Schienenfahrzeug in die Schienen eingeleitete Kraft und/oder Momente auch die dabei entstehenden Geräusche berücksichtigt, indem diese erfasst werden und in einer entsprechenden elektronischen Auswerteeinheit verarbeitet werden. Auf diese Weise macht die vorliegende Erfindung von akustischer Messtechnik gebrauch und kombiniert diese mit Kraftmesstechniken, um bei der Diagnose des Fahrwerks von Schienenfahrzeugen mit Heißläuferortungsanlagen bzw. Flachstellenerkennungsanlagen zuverlässigere Ergebnisse zu erzielen.

Die vorliegende Erfindung umfasst daher die folgenden wesentliche Aspekte:
▪ Kombination von akustischer Messtechnik mit Kraftmesstechnik (wie z.B. WheelScan).
▪ im Bereich mindestens eines abgewickelten Radumfanges werden zeitsynchron diese physikalischen Größen erfasst und deren Korrelation zur optimierten Aussage bzgl. Imperfektionen genutzt.
▪ Die akustisch erfassten bzw. überwachten Bereiche können dabei insbesondere den Bereich der Berührgeometrie, d.h. im Kontakt zwischen Rad und Schiene, und/oder die Achs- bzw. Radlager umfassen.

Gemäß einer Ausführungsform der vorliegenden Erfindung kann die Verarbeitung der akustischen und der Kraftmesssignale beispielsweise die Korrelation der akustischen Signale mit den und Kraftmesssignalen umfassen. Zusätzlich oder alternativ kann die Verarbeitung der akustischen Messsignale und Kraftmesssignale auch die Korrelation verschiedener akustischer Messsignale umfassen, die von unterschiedlichen Mikrophonen aufgenommen wurden. Ferner kann die Verarbeitung der akustischen und Kraftmesssignale auch die Korrelation verschiedener Kraftmesssignale umfassen, die von unterschiedlichen Kraftmessvorrichtungen aufgenommen wurden.

Gemäß einer weiteren Ausführungsform der vorliegenden Erfindung ist eine Anzahl von Schallmessvorrichtungen als Richtmikrofon ausgebildet, die eine bestimmte Richtcharakteristik aufweisen. Das Richtmikrofon ist beispielsweise mit einem Interferenzrohr ausgestattet, das primär den frontal eintreffenden Schall aufnimmt und dadurch dem Mikrofon eine Richtcharakteristik verleiht. Dadurch wird Schall aus anderen Richtungen stärker gedämpft und in geringerem Maße erfasst als der von vorne aus der Längsrichtung des Interferenzrohr eintreffende Schall.

Es können vorteilhaft mehrere Schallmessvorrichtungen nebeneinander in Längsrichtung der Schienenmessstrecke angeordnet werden, um die Schallentwicklung beim Überfahren der Schienenmessstrecke durch das Schienenfahrzeug mehrfach an unterschiedlichen Stellen der Schienenmessstrecke zu erfassen. Dabei können die Schallmessvorrichtungen neben der Schienenmessstrecke in einem bestimmten Winkel in Bezug auf die Längsrichtung der Schienenmessstrecke angeordnet sein, um die Schallwellen zu erfassen, die sich in einem rechten Winkel von der Schienenmessstrecke ausbreiten.

Ferner kann mindestens eine Messvorrichtung zur Erfassung der akustischen Schallwellen quer zur Längsrichtung der Schienenmessstrecke ausgerichtet sein, um diejenigen Schallwellen zu erfassen, die sich nahezu parallel zur Längsrichtung der Schienenmessstrecke oder in einem schrägen Winkel von der Schienenmessstrecke ausbreiten. Auf diese Weise ist mindestens ein erstes Richtmikrofon quer zur Ausrichtung eines zweiten Richtmikrofons ausgerichtet.

Bei einer erfindungsgemäßen Ausführungsform ist mindestens eine Schallmessvorrichtung in Höhe des Rad/Schiene-Kontakts angeordnet und mindestens eine Schallmessvorrichtung in Höhe eines Radlagers des Schienenfahrzeugs angeordnet. Dadurch können die bei der Fahrt des Schienenfahrzeugs im Radlager entstehenden Schallwellen weitgehend unabhängig und separat von den am Rad/Schiene-Kontakt entstehenden Schallwellen erfasst werden.

Dementsprechend können bei einer Ausführungsform der vorliegenden Erfindung die Richtmikrofone so ausgerichtet sein, dass sie Schallwellen erfassen, die beim Überfahren der Schienenmessstrecke durch das Schienenfahrzeug
▪ am Rad/Schiene-Kontakt zwischen einem Rad des Schienenfahrzeugs und der Schienenmessstrecke und/oder
▪ am Radlager des Schienenfahrzeugs entstehen. Dies erleichtert die spätere Auswertung der Schallwellen im Hinblick auf eine Analyse des Zustands der Radlager und der Radgeometrien am Fahrwerk des Schienenfahrzeugs.

Zusätzlich oder alternativ können für die Schallemmissionen im Rad/Schiene-Kontakt-Bereich auch Körperschallmikrofone direkt an der Schiene der Schienenmessstrecke zum Einsatz kommen. Ferner können Beschleunigungsaufnehmer vorgesehen sein, welche die beim Überfahren der Schienenmessstrecke durch das Schienenfahrzeug entstehenden Beschleunigungen in einer oder beiden Schienen erfassen.

Die Kraftmessvorrichtungen dienen der Erfassung der Kräfte und/oder Momente, die bei der Durchfahrung des Schienenfahrzeugs über die Schienenmessstrecke in den Gleiskörper eingeleitet werden. Besonders vorteilhaft ist es, wenn eine Anzahl von Kraftmessvorrichtungen unter einem Schienenfuß und/oder zwischen dem Schienenfuß und dem Schienenbett der Schienenmessstrecke angeordnet sind, da an dieser Stelle die in der Schiene wirkenden Kräfte und Momente auf zuverlässige Weise erfasst werden können.

Dabei können Kraftmessgeräte zum Erfassen der in senkrechter Richtung auf die Schiene einwirkenden Kräfte oder Momente vorgesehen sein und/oder Kraftmessgeräte zum Erfassen der in horizontaler Richtung auf die Schiene einwirkenden Kräfte oder Momente vorgesehen sein. Die Genauigkeit der Messung kann unterstützt werden, wenn an einer Anzahl von benachbarten Schwellen der Schienenmessstrecke jeweils mindestens eine Kraftmessvorrichtung zum Erfassen der auf die Schiene einwirkenden Kräfte und/oder Momente angeordnet sind.

Die Kraftmessvorrichtungen und Schallmessvorrichtungen wandeln die erfassten Kräfte und/oder Momente bzw. die erfassten Schallwellen in elektrische Signale um, die über entsprechende Leitungen an eine Auswerteeinheit weitergeleitet werden. Die Auswerteeinheit umfasst elektronische Mittel, die vorzugsweise so ausgebildet sind, dass sie die von den Kraftmessvorrichtungen und den Schallmessvorrichtungen gelieferten elektrischen Messsignale miteinander korrelieren, überlagern und auswerten können, um daraus Rückschlüsse auf den Zustand des Fahrwerks des Schienenfahrzeugs zu ziehen. Auch lassen sich hier entspr. Kompensationsalgorithmen zur Vermeidung von Fehlalarmen implementieren. Dabei können solche Kompensationsalgorithmen auf die von den Kraftmessvorrichtungen und den Schallmessvorrichtungen gelieferten elektrischen Messsignale angewendet werden, dass Fehlalarme bzw. Fehlinterpretationen der Messsignale vermieden werden.

Nachfolgend wird die Erfindung anhand von Ausführungsbeispielen und der beigefügten Zeichnungen näher erläutert. Zu den Zeichnungen:
- Figur 1: zeigt eine schematische Schnittdarstellung eines Systems gemäß einer Ausführungsform der vorliegenden Erfindung zur Analyse des Fahrwerks von Schienenfahrzeugen durch Messung von Kräften und/oder Schallwellen, die durch ein fahrendes Schienenfahrzeug über eine Schiene erzeugt werden;
- Figur 2: zeigt eine schematische Darstellung vom Aufbau eines Systems gemäß einer weiteren Ausführungsform der vorliegenden Erfindung zur Analyse des Fahrwerks von Schienenfahrzeugen durch Messung von Kräften und/oder Schallwellen, die durch ein fahrendes Schienenfahrzeug über eine Schiene erzeugt werden; und
- Figur 3: ist eine schematische Darstellung eines schadhaften Schienenfahrzeugrads und der mittels eines Messsystems nach der vorliegenden Erfindung erfassten akustischen und Kraftmesssignale.

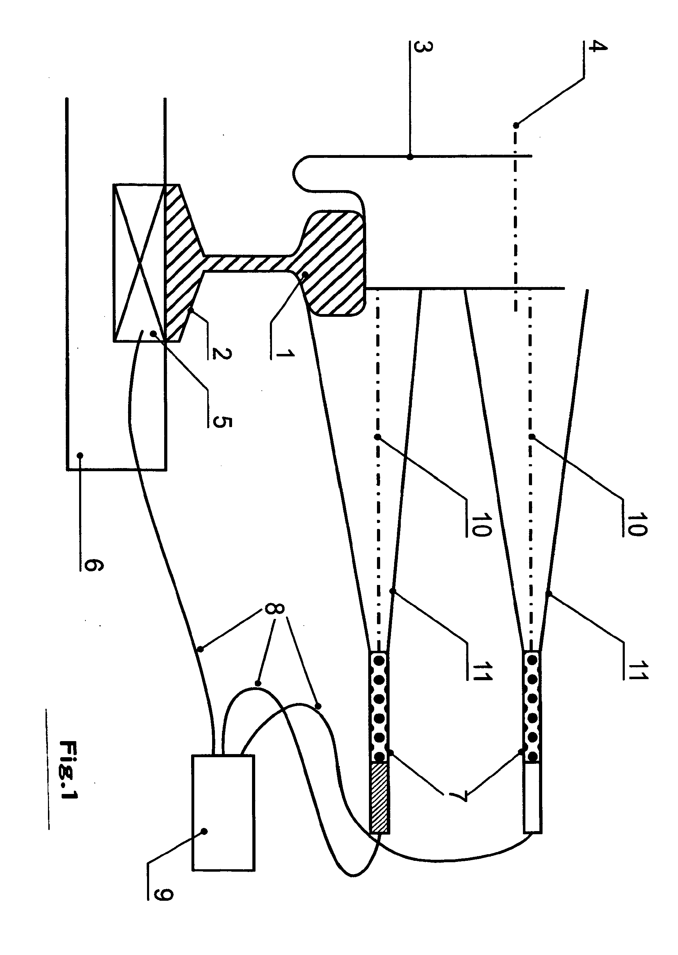

Figur 1 zeigt eine Schnittdarstellung durch einen schematischen Aufbau eines Systems gemäß einer Ausführungsform der vorliegenden Erfindung zur Analyse des Fahrwerkszustands von Schienenfahrzeugen durch Messung von Kräften und/oder Schallwellen, die durch ein fahrendes Schienenfahrzeug über eine Schiene erzeugt werden. Das erfindungsgemäße System umfasst eine Schienenmessstrecke, mit einem Gleiskörper, von dem eine Schiene 1 im schraffierten Querschnitt dargestellt ist. Auf der Schiene 1 steht das Rad 3 eines Schienenfahrzeugs (nicht gezeigt), das bei Fahrt des Schienenfahrzeugs senkrecht zur Papierebene über die Schiene 1 abrollt. Dabei dreht sich das Rad 3 um seine Achse 4, das gleichzeitig das Radlager schematisch darstellt.

Die Schiene hat einen Schienenfuß 2, der über eine Kraftmessvorrichtung 5 auf einer Schwelle oder einem Schienenbett 6 gelagert ist. Somit befindet sich die Kraftmessvorrichtung 5 zwischen dem Schienenfuß 2 und dem Schienenbett bzw. der Schwelle 6, so dass die Kraftmessvorrichtung 5 alle Kräfte und Momente aufgrund von Belastungen durch ein überfahrendes Schienenfahrzeug übertragen kann.

Bei der Kraftmessvorrichtung 5 kann es sich beispielsweise um eine Kraftmesszelle handeln, wie sie grundsätzlich aus dem Dokument DE 39 37 318 A1 bekannt sind. In einer Kraftmesszelle werden unter der Einwirkung der zu messenden Kraft Verformungsteile reversibel verformt, wodurch sich der elektrische Widerstand von an den Verformungsteilen angebrachten Dehnungsmessstreifen verändert, was als Messwert erfasst werden kann. Dieser Messwert kann dann als elektrisches Signal an eine entsprechende Auswerteeinheit weitergeleitet werden.

Bei dem in Figur 1 dargestellten Ausführungsbeispiel werden die auf die Schiene 1 bzw. in den Schienenfuß 2 wirkenden Kräfte und Momente von der Kraftmesszelle 5 gemessen und in elektrische Signale umgewandelt, die über eine Signalleitung 8 an eine Auswerteeinheit 9 weitergeleitet werden. Das erfindungsgemäße System umfasst ferner eine Anzahl von Schallmessvorrichtungen 7, welche die bei der Überfahrung der Schiene durch das Schienenfahrzeug entstehenden Schallwellen erfassen.

Als Schallmessvorrichtungen 7, die von der Schienenmessstrecke mechanisch entkoppelt sind, können Richtmikrofone mit einer bestimmten Richtcharakteristik verwendet werden, wie sie in Figur 1 mit einer bestimmten Ausrichtung 10 und durch entsprechende Richtungskegel 11 angedeutet sind. Das Richtmikrofon 7 umfasst beispielsweise ein Interferenzrohr, das primär den frontal eintreffenden Schall aufnimmt und damit den Schall aus anderen Richtungen in geringerem Maße erfasst als den von vorne in Längsrichtung des Interferenzrohr eintreffenden Schall. Bei dem in Figur 1 dargestellten Ausführungsbeispiel sind zwei Richtmikrofone 7 dargestellt, von denen das untere Richtmikrofon 7 in Höhe des Rad/Schiene-Kontakts angeordnet ist und das obere Richtmikrofon 7 in Höhe eines Radlagers 4 des Schienenfahrzeugs angeordnet ist.

Das obere Richtmikrofon 7 ist so ausgerichtet, dass es die im Radlager 4 entstehenden Schallwellen erfasst, wie durch die Ausrichtung 10 des oberen Richtmikrofons 7 in Richtung des Radlagers 4 dargestellt. Das untere Richtmikrofon 7 ist so ausgerichtet, dass es die am Kontakt zwischen dem Rad 3 und der Schiene 1 entstehenden Schallwellen erfasst, wie durch die Ausrichtung 10 des unteren Richtmikrofons 7 in Richtung des Rad/Schiene-Kontakts dargestellt. Zusätzlich oder alternativ können hier auch Körperschallmikrofone oder Beschleunigungsaufnehmer zum Einsatz kommen, die direkt an der Schiene befestigt sind.

Dadurch können die bei der Fahrt des Schienenfahrzeugs im Radlager 4 entstehenden Schallwellen gleichzeitig und weitgehend getrennt von den am Kontakt zwischen dem Rad 3 und der Schiene 1 entstehenden Schallwellen erfasst werden. Ebenso wie die von den Kraftmessvorrichtungen 5 erzeugten elektrischen Messsignale, werden auch die von den Schallmessvorrichtungen 7 erzeugten elektrischen Messsignale über entsprechende Signalleitungen 8 an die Auswerteeinheit 9 weitergeleitet. Die Auswerteeinheit 9 umfasst elektronische Mittel, die vorzugsweise so ausgebildet sind, dass sie die elektrischen Messsignale miteinander korrelieren und auswerten können, um daraus Rückschlüsse auf den Zustand des Fahrwerks des Schienenfahrzeugs zu ziehen. Dabei können aufgrund der separaten Messung der am Rad/Schiene-Kontakt entstehenden Schallwellen und der im Radlager 4 entstehenden Schallwellen differenzierte Aussagen über den Zustand des Radlagers 4 oder über die Geometrie des Rades 3 getroffen werden.

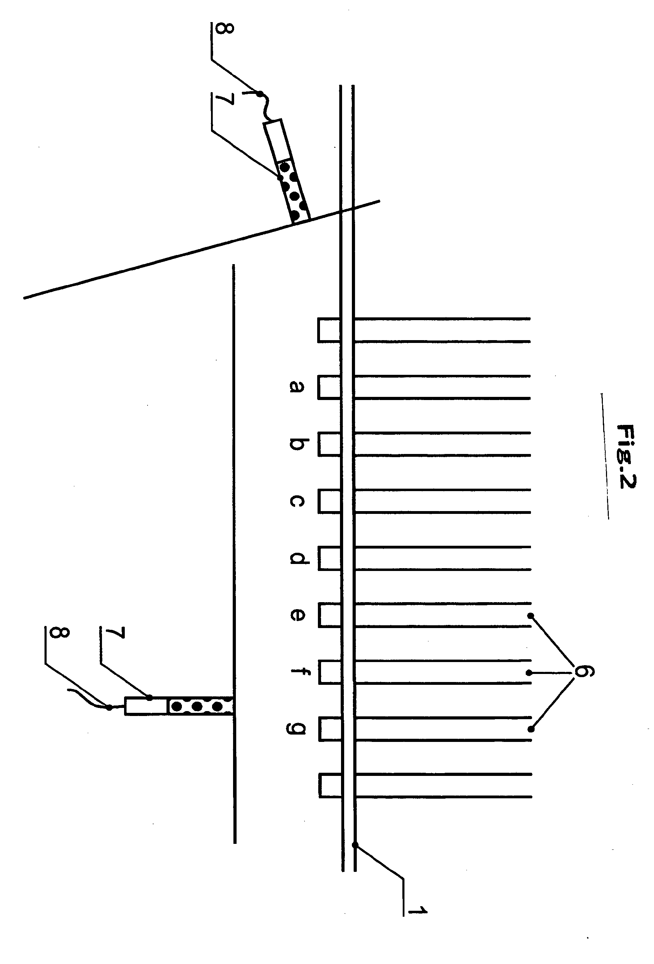

Figur 2 zeigt eine schematische Darstellung vom Aufbau eines Systems gemäß einer weiteren Ausführungsform der vorliegenden Erfindung zur Analyse des Fahrwerkzustands durch Messung von Kräften und/oder akustischen Signalen, die durch ein fahrendes Schienenfahrzeug über eine Schiene 1 erzeugt werden. Wie bei der in Figur 1 dargestellten Ausführungsform ist bei der in Figur 2 dargestellten Ausführungsform nur eine Schiene 1 diesmal in einer Draufsicht dargestellt, die auf mehreren Schwellen a-g abgestützt ist.

Die Genauigkeit der Messung kann unterstützt werden, wenn an einer Anzahl von benachbarten Schwellen a-g der Schienenmessstrecke jeweils mindestens eine Kraftmessvorrichtung 5 zum Erfassen der auf die Schiene einwirkenden Kräfte und/oder Momente angeordnet ist. An der Schiene 1 können auch separate Kraftmessgeräte zum Erfassen der in senkrechter Richtung auf die Schiene 1 einwirkenden Kräfte oder Momente vorgesehen sein und/oder Kraftmessgeräte zum Erfassen der in horizontaler Richtung auf die Schiene 1 einwirkenden Kräfte oder Momente vorgesehen sein.

Erfindungsgemäß werden dazu die von den Kraftmessvorrichtungen 5 gelieferten Messsignale mit den von den Schallmessvorrichtungen 7 gelieferten Messsignale miteinander korreliert und/oder überlagert bzw. kompensiert, um die Zuverlässigkeit der Analyseergebnisse zu unterstützen exaktere zuverlässigere Aussagen in Bezug auf Radgeometrie, Radrundheiten, Imperfektionen, Radschäden oder Lagerschäden am Fahrwerk des Schienenfahrzeugs machen zu können.

Bei der in Figur 2 dargestellten Ausführungsform sind ebenfalls zwei Schallmessvorrichtungen bzw. Richtmikrofone 7 nebeneinander in Längsrichtung der Schienenmessstrecke angeordnet, um die Schallentwicklung beim Überfahren der Schienenmessstrecke durch das Schienenfahrzeug von zwei unterschiedlichen Richtungen aus akustisch zu erfassen. Dazu sind die Schallmessvorrichtungen bzw. Richtmikrofone 7 neben der Schienenmessstrecke in einem bestimmten Winkel in Bezug auf die Längsrichtung der Schienenmessstrecke angeordnet.

Das im rechten Teil von Figur 2 dargestellte Richtmikrofon 7 ist in einem rechten Winkel zur Längsrichtung der Schienenmessstrecke ausgerichtet, um solche Schallwellen zu erfassen, die sich im rechten Winkel von der Schienenmessstrecke ausbreiten. Das im linken Teil von Figur 2 dargestellte Richtmikrofon 7 ist quer zur Längsrichtung der Schienenmessstrecke ausgerichtet, um diejenigen Schallwellen zu erfassen, die sich nahezu parallel zur Längsrichtung der Schienenmessstrecke oder nur in einem schrägen Winkel von der Schienenmessstrecke ausbreiten. Auf diese Weise ist das eine Richtmikrofon 7 quer zur Ausrichtung des anderen Richtmikrofons 7 ausgerichtet.

Die von den Kraftmessvorrichtungen (in Figur 2 nicht gezeigt) und von den Schallmessvorrichtungen 7 erzeugten elektrischen Messsignale werden wiederum über angeschlossene Signalleitungen 8 an die Auswerteeinheit 9 weitergeleitet, wo die Signale durch die elektronischen Mittel der Auswerteeinheit 9 miteinander korreliert und/oder überlagert werden, so dass daraus z.B. Lagerschäden oder Unebenheiten im Laufbereich des Rades erkannt werden können. Dabei kann die Korrelation von zwei akustischen Messsignalen, die aus unterschiedlichen Richtungen aufgenommen wurden, zu weiteren Detailerkenntnissen des detektierten Schadensbildes führen und für eine zuverlässigere Differenzierung zwischen Rad- oder Radlagerschäden verwendet werden.

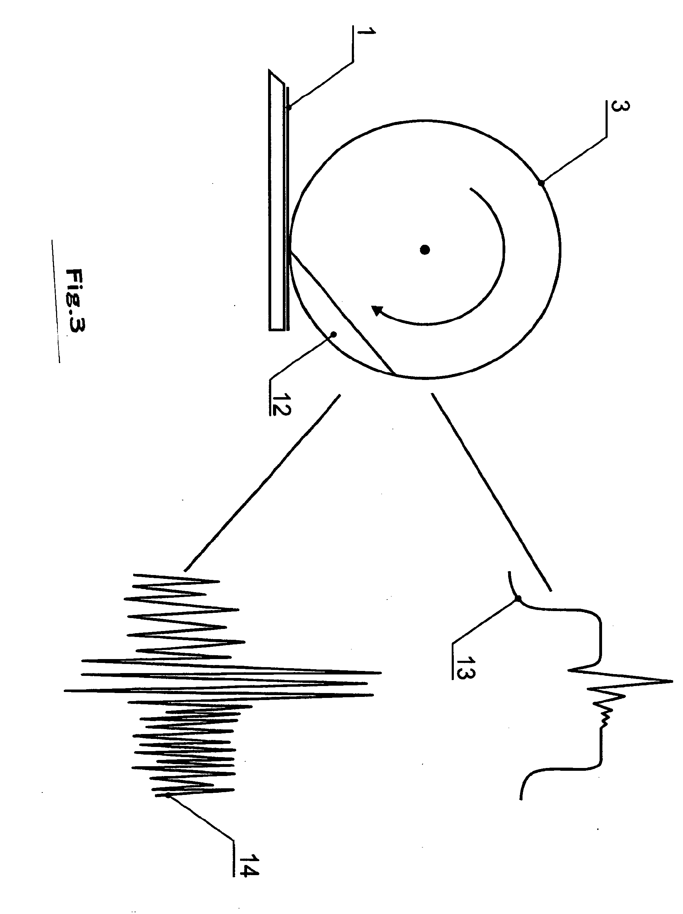

In Figur 3 ist eine schematische Darstellung eines beschädigten Schienenfahrzeug-rads sowie eine schematische Darstellung der mittels eines Messsystems nach der vorliegenden Erfindung erfassten akustischen Messsignale und Kraftmesssignale gezeigt.

Im linken Teil von Figur 3 ist das Rad 3 eines Schienenfahrzeugs dargestellt, das sich in Richtung des Rotationspfeils auf einer Schiene 1 abrollt. Das Rad 3 weist an seinem radial äußeren Laufbereich eine Imperfektion bzw. eine Flachstelle 12 auf, die durch das erfindungsgemäße Analysesystem detektiert werden soll. Sobald die Flachstelle 12 über die Schiene 1 abrollt, erzeugt sie in der Schiene 1 entsprechende Kräfte und/oder Momente, die von Kraftmessvorrichtungen unter der Schiene 1 erfasst werden. Außerdem entsteht beim Abrollen des Rades mit der Flachstelle 12 über die Schiene 1 eine Geräuschentwicklung, deren Schallwellen von Schallmessvorrichtungen erfasst werden.

Im rechten Teil von Figur 3 ist jeweils ein Signalverlauf des Kraftmesssignals 13 und ein Signalverlauf des akustischen Messsignals 14 schematisch wiedergegeben. Den Signalverläufen 13 und 14 ist zu entnehmen, dass jeweils in der Mitte des Signals ein größerer Ausschlag vorliegt, der beim Abrollen der Flachstelle 12 des Rades 3 über die Schiene 1 entstanden ist. Zeitlich vor und hinter diesem größeren Ausschlag werden lediglich kleinere Amplituden erfasst, die ein normales Abrollen des Rades 3 auf der Schiene 1 wiedergeben. Durch erfindungsgemäße Korrelation oder Überlagerung des Kraftmesssignals 13 mit dem akustischen Messsignal 14 können zuverlässigere Aussagen über die Lage, die Art und das Ausmaß eines Rad- oder Radlagerschadens gemacht werden.

Dazu werden die von den Kraftmessvorrichtungen 5 und Schallmessvorrichtungen 7 erzeugten Messsignale an die Auswerteeinheit weitergeleitet, die elektronische Mittel umfasst, um die elektrischen Messsignale miteinander korrelieren, überlagern bzw. kompensieren und auswerten können und daraus Rückschlüsse auf den Zustand des Fahrwerks des Schienenfahrzeugs zu ziehen. Dabei können aufgrund der separaten Messung der in die 1 Schiene eingeleiteten Kräfte mittels Kraftmessvorrichtungen 5 und der gleichzeitigen Messung der am Rad/Schiene-Kontakt entstehenden Schallwellen sowie der im Radlager entstehenden Schallwellen mittels Schallmessvorrichtung 7 differenzierte Aussagen über den Zustand des Radlagers 4 oder über die Geometrie des Rades 3 getroffen werden.

Besonders praktisch kann das erfindungsgemäße System mit der Messstrecke in einem realen Gleiskörpers für Schienenfahrzeuge integriert werden. Auf diese Weise könnten die verkehrenden Schienenfahrzeuge während des Einsatzes, ohne Beeinträchtigungen oder Unterbrechungen des Fahrbetriebs im Verkehr auf den Zustand ihrer Fahrwerke überprüft werden. Bei Erfassung eines unzureichenden Rad- oder Radlagerzustands könnte das betreffende Schienenfahrzeug bald einer entsprechenden Wartung zugeführt werden, ohne dass es zu einer störungsbedingten Unterbrechung des Betriebs oder gar bis zu einem kritischen Fahrwerkszustand kommen kann.

Während in der vorliegenden Beschreibung bestimmte exemplarische Ausführungsformen im Detail beschrieben und in den beigefügten Zeichnungen dargestellt wurden, sind solche Ausführungsformen lediglich illustrativ zu verstehen und nicht einschränkend für den Schutzbereich der Erfindung auszulegen. Es wird deshalb darauf hingewiesen, dass verschiedene Modifikationen an den beschriebenen, dargestellten oder anderen Ausführungsformen der Erfindung vorgenommen werden können, ohne von dem durch die beigefügten Ansprüche definierten Schutzumfang und dem Kern der Erfindung abzuweichen.

### BEZUGSZEICHENLISTE

- 1: Schiene
- 2: Schienenfuß
- 3: Rad eines Schienenfahrzeugs
- 4: Drehachse und Rades und Radlager
- 5: Kraftmessvorrichtung
- 6: Schienenbett bzw. Schwelle
- 7: Schallmessvorrichtung bzw. Richtmikrofon
- 8: Signalleitungen
- 9: elektronische Auswerteeinheit
- 10: Ausrichtung der Richtmikrofone Richtungskegel
- 11: Richtungskegel der Richtmikrofone
- 12: Flachstelle am Rad
- 13: Kraftmesssignalverlauf
- 14: akustischer Messsignalverlauf

## Patentansprüche

1. System zur Analyse des Fahrwerkszustands von Schienenfahrzeugen, umfassend eine Anzahl von Kraftmessvorrictungen (5), die an einer Schienenmessstrecke
zur Erfassung der an der Schienenmessstrecke wirkenden Kräfte und/oder Momente anordenbar sind, **dadurch gekennzeichnet,**
**dass** das System ferner eine Anzahl von Schallmessvorrichtungen (7) umfasst, die von der Schienenmessstrecke mechanisch entkoppelt sind, zur Erfassung der Schallwellen, die beim Überfahren der Schienenmessstrecke durch das Schienenfahrzeug entstehen.

2. System gemäß Anspruch 1, wobei mehrere Schallmessvorrichtungen (7) nebeneinander in Längsrichtung der Schienenmessstrecke angeordnet sind-, und/oder,
wobei die Anzahl von Schallmessvorrichtungen (7) neben der Schienenmessstrecke in einem bestimmten Winkel in Bezug auf die Längsrichtung der Schienenmessstrecke angeordnet sind-, und/oder,
wobei mindestens eine Schallmessvorrichtung (7) zur Erfassung der Schallwellen quer zur Längsrichtung der Schienenmessstrecke ausgerichtet ist und mindestens eine Schallmessvorrichtung (7) zur Erfassung der Schallwellen im Wesentlichen parallel zur Längsrichtung der Schienenmessstrecke ausgerichtet ist, und/oder,
wobei mindestens eine Schallmessvorrichtung (7) in Höhe des Rad/Schiene-Kontakts angeordnet ist und mindestens eine Schallmessvorrichtung (7) in Höhe eines Radlagers des Schienenfahrzeugs angeordnet ist, und/oder,
wobei das System mit der Messstrecke in einem realen Gleiskörpers für Schienenfahrzeuge integrierbar ist.

3. System nach einem der vorangehenden Ansprüche, wobei eine Anzahl von Schallmessvorrichtungen (7) als Richtmikrofon ausgebildet ist, die eine bestimmte Richtcharakteristik aufweisen.

4. System nach einem der vorangehenden Ansprüche, wobei eine Anzahl von Beschleunigungsaufnehmern zur Erfassung der Beschleunigungen in der Schienenmessstrecke vorgesehen sind, die beim Überfahren der Schienenmessstrecke durch das Schienenfahrzeug entstehen.

5. System nach dem vorangehenden Anspruch, wobei mindestens ein erstes Richtmikrofon (7) quer zur Ausrichtung eines zweiten Richtmikrofons (7) ausgerichtet ist.

6. System nach Anspruche 3 oder 5, wobei die Richtmikrofone (7) so ausgerichtet sind, dass sie Schallwellen erfassen, die beim Überfahren der Schienenmessstrecke durch das Schienenfahrzeug
▪ am Rad/Schiene-Kontakt zwischen einem Rad des Schienenfahrzeugs und der Schienenmessstrecke und/oder
▪ am Radlager des Schienenfahrzeugs entstehen.

7. System nach einem der vorangehenden Ansprüche, wobei die Anzahl von Kraftmessvorrichtungen (5) zur Erfassung der Kräfte oder Momente unter mindestens einem Schienenfuß (2) und/oder zwischen dem Schienenfuß (2) und dem Schienenbett (6) der Schienenmessstrecke angeordnet sind.

8. System nach dem vorangehenden Anspruch, wobei an einer Anzahl von benachbarten Schwellen (a-g) der Schienenmessstrecke jeweils mindestens ein Kraftmessgerät (5) zum Erfassen der auf die Schiene (1) einwirkenden Kräfte und/oder Momente angeordnet ist.

9. System nach einem der vorangehenden Ansprüche, wobei Kraftmessgeräte (5) zum Erfassen der auf die Schiene (1) in senkrechter Richtung und/oder in horizontaler Richtung einwirkenden Kräfte und/oder Momente vorgesehen sind.

10. System nach einem der vorangehenden Ansprüche, wobei ferner elektronische Mittel vorgesehen sind, welche die elektrischen Messsignale (13, 14) von den Kraftmessvorrichtungen (5) und den Schallmessvorrichtungen (7) auswerten, um daraus Rückschlüsse auf den Zustand des Fahrwerks (3 ,4) des Schienenfahrzeugs zu ziehen.

11. System nach dem vorangehenden Anspruch, wobei die elektronische Mittel ausgebildet sind, die von den Kraftmessvorrichtungen (5) und Schallmessvorrichtungen (7) gelieferten Messsignale (13, 14) miteinander zu korrelieren und/oder überlagern, um daraus Rückschlüsse auf den Zustand des Fahrwerks (3, 4) des Schienenfahrzeugs zu ziehen.

12. Verfahren zur Analyse des Fahrwerkszustands von Schienenfahrzeugen mittels einer Schienenmessstrecke, umfassend die folgenden Schritte:
▪ Überfahren einer Schienenmessstrecke mit einem Schienenfahrzeug;
▪ Erfassen der an der Schienenmessstrecke wirkenden Kräfte und/oder Momente, die beim Überfahren der Schienenmessstrecke durch das Schienenfahrzeug entstehen, mittels einer Anzahl von Kraftmessvorrichtungen (5);
▪ Erfassen der Schallwellen, die beim Überfahren der Schienenmessstrecke durch das Schienenfahrzeug entstehen, mittels einer Anzahl von Schallmessvorrichtungen (7), die von der Schienenmessstrecke mechanisch entkoppelt sind; und
▪ Auswerten der von den Kraftmessvorrichtungen (5) und den Schallmessvorrichtungen (7) gelieferten elektrischen Messsignale (13, 14), um daraus Rückschlüsse auf den Zustand des Fahrwerks (3, 4) des Schienenfahrzeugs zu ziehen.

13. Verfahren nach Anspruch 12, wobei das Erfassen der Kräfte und/oder Momente in der Schienenmessstrecke und das Erfassen der Schallwellen gleichzeitig vorgenommen wird, und/oder,
wobei das Erfassen der Kräfte und/oder Momente in der Schienenmessstrecke und das Erfassen der Schallwellen zeitsynchron und über mindestens einen vollständig abgewickelten Umfang eines Schienenfahrzeugrades erfolgt.

14. Verfahren nach einem der Ansprüche 12 bis 13, ferner umfassend die Schritte:
▪ Korrelieren und/oder Überlagern der von den Kraftmessvorrichtungen (5) und den Schallmessvorrichtungen (7) gelieferten elektrischen Messsignale (13, 14);
▪ Auswerten der Korrelation der von den Kraftmessvorrichtungen (5) und den Schallmessvorrichtungen (7) gelieferten elektrischen Messsignale (13, 14), um daraus Rückschlüsse auf den Zustand des Fahrwerks (3, 4) des Schienenfahrzeugs zu ziehen.

15. Verfahren nach einem der Ansprüche 12 bis 14, ferner umfassend die Schritte:
▪ Anwenden von Kompensationsalgorithmen auf die von den Kraftmessvorrichtungen (5) und den Schallmessvorrichtungen (7) gelieferten elektrischen Messsignale (13, 14) zur Vermeidung von Fehlinterpretationen der Messsignale.

## Claims

1. System for analyzing the condition of the running gear of rail vehicles, comprising a number of force measurement devices (5) that can be arranged on a rail measuring section for the purpose of detecting forces and/or torques, **characterized in that**
the system additionally comprises a number of acoustic measurement devices (7) that are mechanically decoupled from the rail measuring section for the purpose of detecting sound waves that arise when the rail vehicle travels over the rail measuring section.

2. System according to claim 1, wherein a plurality of acoustic measurement devices (7) are arranged next to one another in the longitudinal direction of the rail measuring section, and/or the multiple acoustic measurement devices (7) are arranged next to the rail measuring section at a specific angle with respect to the longitudinal direction of the rail measuring section, and/or at least one acoustic measurement device (7) for detecting the sound waves is oriented transversely to the longitudinal direction of the rail measuring section, and at least one acoustic measurement device (7) for detecting the sound waves is oriented substantially parallel to the longitudinal direction of the rail measuring section, and/or at least one acoustic measurement device (7) is arranged at the level of the wheel/rail contact and at least one acoustic measurement device (7) is arranged at the level of a wheel bearing of the rail vehicle, and/or wherein the system with the measuring section can be integrated into a real track superstructure for rail vehicles.

3. System according to one of the preceding claims, wherein a number of acoustic measurement devices (7) are implemented as directional microphones that have a specific directional characteristic.

4. System according to one of the preceding claims, wherein a number of accelerometers are provided for detecting the accelerations in the rail measuring section that occur when the rail vehicle travels over the rail measuring section.

5. System according to the preceding claim, wherein at least one first directional microphone (7) is arranged transversely to the orientation of a second directional microphone (7).

6. System according to claim 3 or 5, wherein the directional microphones (7) are oriented such that they detect the sound waves that occur
• at the wheel/rail contact between a wheel of the rail vehicle and the rail measuring section and/or
• at the wheel bearing of the rail vehicle
when the rail vehicle travels over the rail measuring section.

7. System according to one of the preceding claims, wherein the plurality of force measurement devices (5) for detecting the forces or torques are arranged beneath at least one rail foot (2) and/or between the rail foot (2) and the track bed (6) of the rail measuring section.

8. System according to the preceding claim, wherein at least one force measurement device (5) for detecting the forces and/or torques acting on the rail (1) is arranged on each of a number of adjacent railroad ties (a-g) of the rail measuring section.

9. System according to one of the preceding claims, wherein force measurement devices (5) are provided for detecting the forces and/or torques acting on the rail (1) in the perpendicular direction and/or in the horizontal direction.

10. System according to one of the preceding claims, wherein electronic means are additionally provided that analyze the electrical measurement signals (13, 14) from the force measurement devices (5) and the acoustic measurement devices (7) in order to draw conclusions therefrom regarding the condition of the running gear (3, 4) of the rail vehicle.

11. System according to one of the preceding claims, wherein the electronic means are designed to correlate and/or superimpose with one another the electrical measurement signals (13, 14) supplied by the force measurement devices (5) and acoustic measurement devices (7) in order to draw conclusions therefrom regarding the condition of the running gear (3, 4) of the rail vehicle.

12. Method for analyzing the condition of the running gear of rail vehicles by means of a rail measuring section, comprising the following steps:
• causing a rail vehicle to travel over a rail measuring section;
• detecting, by means of a number of force measurement devices (5), the forces and/or torques that act on the rail measuring section when the rail vehicle travels over the rail measuring section;
• detecting, by means of a number of acoustic measurement devices (7) that are mechanically decoupled from the rail measuring section, the sound waves that occur when the rail vehicle travels over the rail measuring section; and
• evaluating the electrical measurement signals (13, 14) supplied by the force measurement devices (5) and acoustic measurement devices (7) in order to draw conclusions therefrom regarding the condition of the running gear (3, 4) of the rail vehicle.

13. Method according to claim 12, wherein the detection of the forces and/or torques in the rail measuring section and the detection of the sound waves are performed simultaneously, and/or the detection of the forces and/or torques in the rail measuring section and the detection of the sound waves take place in time synchronization and over at least one fully completed circumference of a rail vehicle wheel.

14. Method according to one of claims 12 to 13, further comprising the steps:
• correlating and/or superimposing the electrical measurement signals (13, 14) supplied by the force measurement devices (5) and acoustic measurement devices (7);
• evaluating the correlation of the electrical measurement signals (13, 14) supplied by the force measurement devices (5) and acoustic measurement devices (7) in order to draw conclusions therefrom regarding the condition of the running gear (3, 4) of the rail vehicle.

15. Method according to one of claims 12 to 14, further comprising the steps:
• applying compensation algorithms to the electrical measurement signals (13, 14) supplied by the force measurement devices (5) and acoustic measurement devices (7) to avoid misinterpretation of the measurement signals.

## Revendications

1. Système pour l'analyse de l'état de la suspension de véhicules ferroviaires, comprenant plusieurs dispositifs dynamométriques (5) pour la mesure des forces et/ou des couples exercés sur la portion de mesure, **caractérisé en ce que** ce système comprenant en outre plusieurs dispositifs de mesure de vibrations (7) découplés mécaniquement de la portion de mesure, pour la mesure des vibrations générées lors du passage du véhicule ferroviaire sur la portion de mesure.

2. Système selon la revendication 1, plusieurs dispositifs de mesure de vibrations (7) étant disposés les uns à côté des autres dans la direction longitudinale de la portion de mesure, et/ou
les dispositifs de mesure de vibrations (7) étant disposés à proximité de la portion de mesure avec un angle déterminé par rapport à la direction longitudinale de la portion de mesure, et/ou
au moins un dispositif de mesure de vibrations (7) étant orienté, pour la mesure des vibrations, transversalement par rapport à la direction longitudinale de la portion de mesure et au moins un dispositif de mesure de vibrations (7) étant orienté, pour la mesure des vibrations, de manière globalement parallèle à la direction longitudinale de la portion de mesure, et/ou
au moins un dispositif de mesure de vibrations (7) étant disposé à la hauteur du contact roue/rail et au moins un dispositif de mesure de vibrations (7) étant disposé à la hauteur d'un essieu du véhicule ferroviaire, et/ou
le système pouvant être intégré, avec la portion de mesure, dans un corps de voie ferrée réel pour les véhicules ferroviaires.

3. Système selon l'une des revendications précédentes, plusieurs dispositifs de mesure de vibrations (7) étant conçus comme des microphones directionnels qui présentent une caractéristique directionnelle déterminée.

4. Système selon l'une des revendications précédentes, plusieurs accéléromètres étant prévus pour la mesure des accélérations sur la portion de mesure générées par le passage du véhicule ferroviaire sur la portion de mesure.

5. Système selon l'une des revendications précédentes, au moins un premier microphone directionnel (7) étant orienté transversalement par rapport à l'orientation d'un deuxième microphone directionnel (7).

6. Système selon la revendication 3 ou 5, les microphones directionnels (7) sont orientés de façon à mesurer les vibrations générées lors du passage du véhicule ferroviaire sur la portion de mesure
▪ au niveau du contact roue/rail entre une roue du véhicule ferroviaire et la portion de mesure et/ou
▪ au niveau de l'essieu du véhicule ferroviaire.

7. Système selon l'une des revendications précédentes, plusieurs dispositifs dynamométriques (5) étant prévus pour la mesure des forces ou des couples sous au moins un patin de rail (2) et/ou entre le patin de rail (2) et le ballast (6) de la portion de mesure.

8. Système selon la revendication précédente, au moins un dispositif dynamométrique (5) étant prévu sur plusieurs traverses adjacentes (a-g) de la portion de mesure, pour la mesure des forces et/ou des couples exercés sur le rail (1).

9. Système selon l'une des revendications précédentes, des dispositifs dynamométriques (5) étant prévus pour la mesure des forces et/ou des couples exercés sur le rail (1) dans la direction verticale et/ou dans la direction horizontale.

10. Système selon l'une des revendications précédentes, des moyens électroniques étant en outre prévus, qui analysent les signaux de mesure électriques (13, 14) provenant des dispositifs dynamométriques (5) et des dispositifs de mesure de vibrations (7), afin d'en déduire l'état de la suspension (3, 4) du véhicule ferroviaire.

11. Système selon la revendication précédente, les moyens électroniques étant conçus pour corréler et/ou superposer entre eux les signaux de mesure (13, 14) générés par les dispositifs dynamométriques (5) et les dispositifs de mesure de vibrations (7), afin d'en déduire l'état de la suspension (3, 4) du véhicule ferroviaire.

12. Procédé d'analyse de l'état de la suspension de véhicules ferroviaires à l'aide d'une portion de mesure, comprenant les étapes suivantes :
▪ passage d'un véhicule ferroviaire sur une portion de mesure ;
▪ mesure des forces et/ou des couples exercés sur la portion de mesure, qui apparaissent lors du passage du véhicule ferroviaire sur la portion de mesure, à l'aide de plusieurs dispositifs dynamométriques (5) ;
▪ mesure des vibrations générées par le passage du véhicule ferroviaire sur la portion de mesure à l'aide de plusieurs dispositifs de mesure de vibrations (7), découplés mécaniquement de la portion de mesure ; et
▪ analyse des signaux de mesure (13, 14) délivrés par les dispositifs dynamométriques (5) et les dispositifs de mesure de vibrations (7), afin d'en déduire l'état de la suspension (3, 4) du véhicule ferroviaire.

13. Procédé selon la revendication 12, la mesure des forces et/ou des couples exercés sur la portion de mesure et la mesure des vibrations étant effectuées en même temps, et/ou
la mesure des forces et/ou des couples exercés sur la portion de mesure et la mesure des vibrations étant effectuées de manière synchrone et à l'aide d'au moins une circonférence entièrement déroulée d'une roue de véhicule ferroviaire.

14. Procédé selon l'une des revendications 12 à 13, comprenant en outre les étapes suivantes :
▪ corrélation et/ou superposition des signaux de mesure électriques (13, 14) délivrés par les dispositifs dynamométriques (5) et les dispositifs de mesure de vibrations (7) ;
▪ analyse de la corrélation des signaux de mesure électriques (13, 14) délivrés par les dispositifs dynamométriques (5) et les dispositifs de mesure de vibrations (7) afin d'en déduire l'état de la suspension (3, 4) du véhicule ferroviaire.

15. Procédé selon l'une des revendications 12 à 14, comprenant en outre les étapes suivantes :
▪ application d'algorithmes de compensation aux signaux de mesure électriques (13, 14) délivrés par les dispositifs dynamométriques (5) et les dispositifs de mesure de vibrations (7), afin d'éviter des interprétations erronées des signaux de mesure.
